# EUROPÄISCHE PATENTANMELDUNG

(11) **EP 4 461 977 A1**
(43) Veröffentlichungstag der Anmeldung: **13.11.2024**
(21) Anmeldenummer: 24164485.5
(22) Anmeldetag: 19.03.2024
(51) Int. Cl.: F16B 37/06

(54) **FUNKTIONSELEMENT**

(30) Priorität: 11.05.2023 DE 102023112483
(71) Anmelder: Profil Verbindungstechnik GmbH & Co. KG, 61381 Friedrichsdorf (DE)
(72) Erfinder: Diehl, Oliver, 61250 Usingen (DE); Jene, Tobias, 61381 Friedrichsdorf (DE); Sowa, Christian, 63165 Mühlheim a. Main (DE); Mahlme, Amer, 61352 Bad Homburg (DE)
(74) Vertreter: Manitz Finsterwald Patent- und Rechtsanwaltspartnerschaft mbB

(57) **Zusammenfassung**

Die vorliegende Erfindung betrifft ein Funktionselement zur Anbringung an einem Werkstück, insbesondere an einem Blechteil, umfassend
einen Kopfteil mit einer Anlagefläche, die in einem befestigten Zustand des Funktionselements an dem Werkstück anliegt,
einen sich in axialer Richtung von dem Kopfteil erstreckenden Befestigungsabschnitt, insbesondere Nietabschnitt, zum Befestigen des Funktionselements an dem Werkstück, wobei der Befestigungsabschnitt eine einen Hohlraum in Umfangsrichtung begrenzende Wandung umfasst, die an einer dem Kopfteil abgewandten Seite eine freie Kante aufweist, wobei die Kante und/oder die Wandung in Umfangsrichtung konkav und konvex gekrümmte Abschnitte umfasst.

## Beschreibung

Die Erfindung betrifft ein Funktionselement zur Anbringung an einem Werkstück.

Funktionselemente werden in einer Vielzahl von Anwendungen eingesetzt, insbesondere in der Kraftfahrzeugtechnik. Sie dienen beispielsweise dazu, an einem Werkstück, z.B. an einem Blechteil, Befestigungsmöglichkeiten für andere Werkstücke zu schaffen oder andere Funktionalitäten bereitzustellen, die sich nicht ohne weiteres oder nur unter großen Aufwand an dem Werkstück selbst ausbilden lassen. Dabei ist es natürlich wichtig, dass sich die Elemente auf effiziente Weise mit dem jeweiligen Werkstück verbinden lassen. Die Verbindung muss außerdem belastbar und zuverlässig sein.

Bei Funktionselementen kann es sich beispielsweise um Bolzenelemente, deren Schaft mit einem Gewinde versehen sein kann, oder um Mutterelemente handeln, die zum Beispiel ein Innengewinde aufweisen. Andere Bauformen sind denkbar. Beispielsweise können Funktionselemente auch Komponenten oder Abschnitte aufweisen, die für eine Rast- oder Steckverbindung vorgesehen sind.

Funktionselemente sind in verschiedenen Ausführungen bekannt. Es gibt beispielsweise Nietelemente, die einen Nietabschnitt aufweisen, welcher bei der Anbringung an einem Blechteil verformt wird, um einen Nietbördel auszubilden und mit einem Kopfteil eine ringförmige Aufnahme für den Rand eines Lochs im Blechteil zu bilden. Bei solchen Nietelementen wird also das Funktionselement bei der Anbringung an das Blechteil verformt. Die Verformungen des Nietabschnitts können in vielen Fällen erheblich sein. Bei derartigen Umformungen treten in dem Nietabschnitt erhebliche Scherkräfte auf, die Schwächungen verursachen können, was sich wiederum nachteilig auf die Verbindung des Elements mit dem Werkstück auswirken kann. Daher muss der Nietabschnitt genügend Material umfassen, das diese Umformung aufnehmen kann.

Nietelemente können selbststanzend sein. D.h. es muss in dem Werkstück kein vorbereitetes Loch vorhanden sein, in das der Nietabschnitt eingeführt wird, sondern der Nietabschnitt stanzt sich - salopp formuliert - sein eigenes Loch. Da ein Vorlochen des Werkstücks entfällt, kann ein Arbeitsschritt eingespart werden, was einen Kostenvorteil mit sich bringt. Der Nietabschnitt eines selbststanzenden Nietelements muss jedoch hinreichend stabil sein, so dass er sich bei dem Einstanzen in das Werkstück und dem Heraustrennen des Stanzbutzens nicht in unerwünschter Weise verformt.

Nietabschnitte, die im Zuge des Befestigungsprozesses stark umgeformt werden und/oder selbststanzende Nietabschnitte weisen also eine recht große Stabilität auf, was wiederum bedeutet, dass bei der Befestigung der entsprechenden Elemente erhebliche Kräfte (Setzkräfte) aufgebracht werden müssen, um den Nietabschnitt zuverlässig umzuformen. Die verwendeten Setzeinrichtungen müssen daher entsprechend leistungsfähig ausgelegt werden.

Es ist eine Aufgabe der vorliegenden Erfindung, ein Funktionselement der eingangs beschriebenen Art anzugeben, das sich mit geringerem Kraftaufwand an einem Werkstück befestigen lässt, ohne dass dabei Abstriche bei der Zuverlässigkeit der Verbindung Element-Werkstück gemacht werden müssen.

Die Lösung dieser Aufgabe erfolgt mit einem Funktionselement mit den Merkmalen des Anspruchs 1.

Das erfindungsgemäße Funktionselement ist zur Anbringung an einem Werkstück, insbesondere an einem Blechteil, vorgesehen. Es umfasst einen Kopfteil mit einer Anlagefläche, die in einem befestigten Zustand des Funktionselements an dem Werkstück anliegt. Ferner ist ein sich in axialer Richtung von dem Kopfteil erstreckender Befestigungsabschnitt, insbesondere Nietabschnitt, zum Befestigen des Funktionselements an dem Werkstück vorgesehen. Der Befestigungsabschnitt umfasst eine einen Hohlraum in Umfangsrichtung begrenzende Wandung, die an einer dem Kopfteil abgewandten Seite eine freie Kante aufweist, wobei die Kante und/oder die Wandung in Umfangsrichtung konkav und konvex gekrümmte Abschnitte umfasst. Grundsätzlich können auch - in axialer Richtung gesehen - geradlinige Abschnitte vorhanden sein.

Die Formulierung "ein sich in axialer Richtung von dem Kopfteil erstreckender Befestigungsabschnitt" ist insbesondere so zu verstehen, dass sich Wandung des Befestigungsabschnitts parallel zu der axialen Richtung erstreckt.

Diese Ausgestaltung bietet einerseits eine Verdrehsicherung. Andererseits - und dies ist gerade bei Nietelementen von Bedeutung - steht dadurch mehr Material zur Verfügung als bei einer z.B. kreisrunden Ausgestaltung der Wandung (vergleichbare Wanddicke vorausgesetzt), sodass bei einem Umformen der Wandung auftretende Spannungen besser aufgenommen werden können. Bei gleicher Belastbarkeit kann die Wandung also dünnwandiger ausgestaltet werden.

Zudem wird der Befestigungsabschnitt durch eine Matrize mit beispielsweise kreisförmiger Geometrie nicht gleichzeitig als Ganzes umgeformt. Es erfolgt ein graduelles Umformen des Abschnitts mit zunehmender Eindringtiefe des Elements in das Werkstück. Die von der Setzeinrichtung aufgebrachte Kraft wird somit bei einem Zusammenwirken des Befestigungsabschnitts mit der Matrize nicht gleichmäßig verteilt, sondern "wandert" von den radial innen liegenden Enden der gekrümmten Abschnitte, die als erste mit der Matrize zusammenwirken, während des Befestigungsprozesses nach radial außen. Die radial äußeren Enden der gekrümmten Abschnitte werden als letztes umgeformt.

Die Geometrie der gekrümmten Abschnitte bestimmt also, wie sich die Umformkräfte während des Umformprozesses zeitlich und räumlich verteilen. Oder anderes formuliert: Durch eine geeignete Wahl der Geometrie der Stanzkante und/oder der Wandung können der Stanz- und/oder der Umformprozess optimiert werden. Die Fokussierung der Umformkräfte ermöglicht auch eine optimale Ausnutzung der von der Setzeinrichtung aufbringbaren Kräfte.

Weitere Ausführungsformen der Erfindung sind in den Ansprüchen, der Beschreibung und den beigefügten Zeichnungen angegeben.

Gemäß einer Ausführungsform weist die Kante in einer Seitenansicht senkrecht zu der axialen Richtung einen gewellten oder gezackten Verlauf auf.

Bevorzugt sind die Kante und/oder die Wandung in Bezug auf eine Mittenachse des Funktionselements drehsymmetrisch ausgestaltet ist. D. h. durch eine Drehung des Befestigungsabschnitts um einen Winkel von 360°/X (X ist eine natürliche Zahl) um die Mittenachse wird die Kontur des Befestigungsabschnitts wieder auf sich selbst abgebildet.

Gemäß einer weiteren Ausführungsform ist ein Abstand der Kante von dem Kopfteil in Umfangrichtung nicht konstant und/oder die Kante liegt in Umfangsrichtung gesehen nicht in vollständig in einer Ebene, die senkrecht zu einer Längsachse oder Setzrichtung des Funktionselements angeordnet ist.

Diese Ausgestaltung ist insbesondere dann vorteilhaft, wenn die Kante eine Stanzkante ist und das Funktionselement selbststanzend ist. Durch die besondere Ausgestaltung der Stanzkante ist diese zumindest zu Beginn des Stanzprozesses nicht mit ihrem vollen Umfang in Kontakt mit der Oberfläche des Werkstücks. D.h. die aufgebrachte Stanzkraft wird auf einen kleineren Kontaktbereich konzentriert als bei einer gleichzeitigen Anlage der gesamten Stanzkante. Dies wiederum bedeutet, dass - bei gleicher Stanzkraft - stärkere Kräfte zwischen der Stanzkante und dem Werkstück wirken als bei herkömmlichen Elementen.

Oder anderes formuliert: Letztlich wird durch die Ausgestaltung des Funktionselements mit einer Stanzkante, die in Umfangsrichtung gesehen nicht in vollständig in einer Ebene liegt, die senkrecht zu einer Längsachse bzw. zu der Stanzrichtung des Elements angeordnet ist, auf einfache Weise eine Befestigung an festeren Werkstücken ermöglicht, ohne dass von der verwendeten Stanzeinrichtung größere Stanzkräfte aufgebracht werden müssen. Bildlich gesprochen wird dies durch eine Fokussierung der Kräfte auf bestimmte Bereiche der Stanzkante erreicht. Die Geometrie der Stanzkante, d.h. ihre - in Umfangsrichtung gesehen - Variation der axialen Erstreckung legt fest, wann welche Abschnitte der Stanzkante im Verlauf des Stanzprozesses mit einer Eintrittsseite des Werkstücks in Kontakt kommen und dieses auf der Austrittseite wieder verlassen. Dabei spielt auch die Dicke des Werkstücks eine Rolle. Durch die Wahl der Geometrie der Stanzkante kann somit der Stanzprozess gezielt beeinflusst werden, um ein optimales Ergebnis zu erhalten.

Der Stanzprozess beginnt in Umfangsrichtung der Stanzkante gesehen somit nicht überall zeitgleich.

Gleiches gilt für ein Einsetzen des Umformprozesses des Befestigungsabschnitts, wenn dieser als (selbststanzender oder nicht-selbststanzender) Nietabschnitt ausgebildet ist. Die axiale am weitesten von dem Kopfteil beanstandeten Abschnitte der Kante wirken als erste mit einer beispielsweise kreisförmig ausgebildeten Matrize zusammen. D. h. die Umformung des Nietabschnitts beginnt nicht im Umfangsrichtung überall zeitgleich, was mit einer substantiellen und einigermaßen plötzlichen Zunahme der wirkenden Kräfte einhergeht, sondern "wandert" in Abhängigkeit der gewählten Geometrie der Kante. Dies hat zur Folge, dass die aufgrund der Wechselwirkung mit der Matrize ansteigenden Kräfte räumlich und zeitlich verteilt werden. Die auftretenden und aufzubringenden Maximalkräfte und Belastungen werden daher reduziert.

Gemäß einer Ausführungsform umfasst die Kante in axialer Richtung gekrümmte und/oder relativ zu der axialen Richtung geneigte Abschnitte. Es können auch Abschnitte vorgesehen sein, die senkrecht zu der Längsachse bzw. zu der Befestigungsrichtung des Elements verlaufen.

Beispielsweise weist die Kante in einer Seitenansicht senkrecht zu der axialen Richtung einen gewellten oder gezackten Verlauf auf.

In vielen Anwendungsfällen ist es vorteilhaft, wenn die Kante in axialer Richtung und/oder in Umfangsrichtung frei von Unstetigkeitsstellen ist, um Ausgangspunkte für Schwächungen der Wandung zu vermeiden.

Die Kante kann über einen gekrümmten äußeren oder geradlinig aber zur axialen Richtung geneigten (konischen) Übergangsabschnitt (z.B. Anfasung) in eine Außenseite der Wandung übergehen. Alternativ oder zusätzlich kann die Kante über einen geradlinigen aber zur axialen Richtung geneigten inneren Übergangsabschnitt in eine dem Hohlraum zugewandte Innenseite der Wandung übergehen. Diese Maßnahmen dienen zur Vereinfachung des Einführens des Elements in ein vorgefertigtes Loch bzw. zur Verbesserung des Stanzvorgangs.

Gemäß einer konstruktiv einfachen und effizienten Ausführungsform weist die Wandung in Umfangsrichtung eine im Wesentlichen konstante Dicke auf.

Die Anlagefläche kann ringförmig sein. Sie kann mit zumindest einem Verdrehsicherungsmerkmal versehen sein, insbesondere mit einer Mehrzahl von in Umfangsrichtung verteilten Verdrehsicherungsmerkmalen, die bevorzugt regelmäßig verteilt sind. Beispielhafte Merkmale dieser Art sind Rillen, Kerben, Rippen, Vorsprünge oder Spitzen. Sie können beliebig miteinander kombiniert werden.

Die Anlagefläche kann eine sich in Umfangsrichtung erstreckende Nut aufweisen. Sie kann auch konisch geneigt ausgestaltet sein, wobei sie in Richtung zu der Kante hin konvergieren oder divergieren kann.

Gemäß einer Ausführungsform umfasst der Kopfteil einen Funktionsabschnitt. Alternativ oder zusätzlich kann sich ein Funktionsabschnitt von der dem Befestigungsabschnitt abgewandten Seite des Kopfteils erstrecken.

Das Funktionselement kann ein Mutterelement oder ein Bolzenelement sein.

Wie bereits erwähnt wurde, kann die freie Kante eine Stanzkante sein, so dass das Funktionselement selbststanzend ist.

Nachfolgend wird die vorliegende Erfindung rein beispielhaft anhand vorteilhafter Ausführungsformen unter Bezugnahme auf die beigefügten Zeichnungen erläutert. Es zeigen:
- Fig. 1: ein Mutterelement mit einer in axialer Richtung gewellten Stanzkante in einer perspektivischen Ansicht,
- Fig. 2: eine teilgeschnittene Seitenansicht des Elements gemäß Fig. 1,
- Fig. 3: eine Vergrößerung eines Ausschnitts der Fig. 2,
- Fig. 4: eine teilweise axiale Ansicht des Elements gemäß Fig. 1,
- Fig. 5: eine teilgeschnittene Perspektivansicht eines Mutterelements mit einem in Umfangsrichtung gewellten Befestigungsabschnitt,
- Fig. 6: eine teilgeschnittene Seitenansicht des Elements gemäß Fig. 5,
- Fig. 7: eine axiale Ansicht des Elements gemäß Fig. 5,
- Fig. 8: eine teilgeschnittene Perspektivansicht eines Bolzenelements mit einem in Umfangsrichtung gewellten Nietabschnitt mit einer in axialer Richtung gewellten Stanzkante,
- Fig. 9: eine axiale Ansicht des Elements gemäß Fig. 8 und
- Fig. 10: eine teilgeschnittene Seitenansicht des Elements gemäß Fig.8.

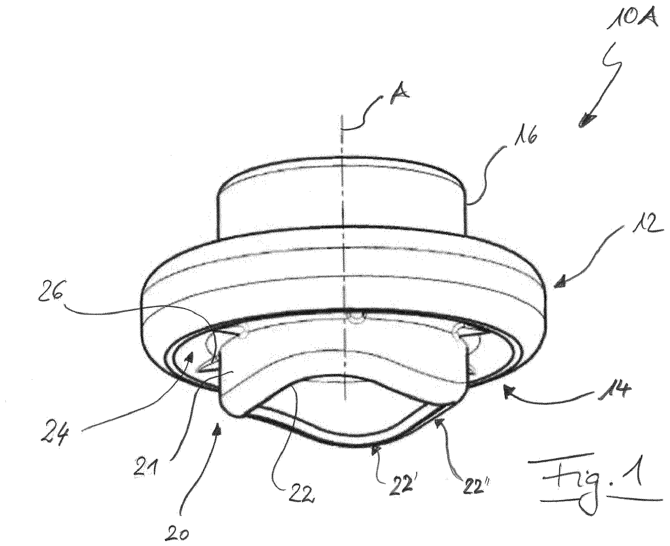

Fig. 1 zeigt ein Funktionselement 10A mit einem Kopfteil 12, das eine Anlagefläche 14 aufweist, die in einem befestigten Zustand des Elements 10A an einem Werkstück (nicht gezeigt) anliegt.

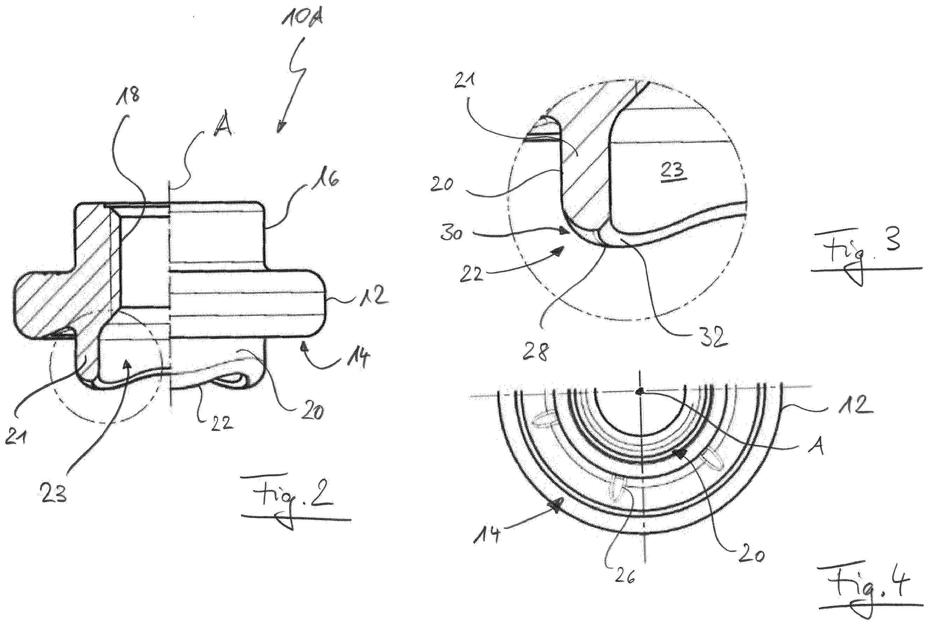

Von dem Kopfteil 12 erstreckt sich von der der Anlagefläche 14 abgewandten Seite in axialer Richtung A (eingezeichnet ist die Mittenachse des Elements 10A) ein Funktionsabschnitt 16, der im vorliegenden Beispiel ein Innengewinde 18 (siehe Fig. 2) trägt.

Von der gegenüberliegenden Seite des Kopfteils 12 erstreckt sich ein Befestigungsabschnitt 20, der im vorliegenden Beispiel als Nietabschnitt ausgebildet ist. Der Befestigungsabschnitt 20 wird durch eine Wandung 21 gebildet, die einen Hohlraum 23 in Umfangsrichtung begrenzt.

An dem freien Ende der Wandung 21 bzw. des Befestigungsabschnitts 20 ist eine Stanzkante 22 ausgebildet. Sie ermöglicht es, das Element 10A in ein Werkstück (nicht gezeigt) einzustanzen. D. h. es muss kein vorgefertigtes Loch vorhanden sein, in das das Element 10A eingebracht wird. Aufgrund seiner selbststanzenden Eigenschaften formt das Element 10A sein eigenes Loch unter Heraustrennen eines Butzens. Bei dem Stanzprozess wird auch der Befestigungsabschnitt 20 durch eine geeignete Matrize in an sich bekannter Weise zumindest abschnittsweise umgebördelt, sodass ein Hinterschnitt entsteht, durch den das Element 10A an dem Werkstück fixiert wird.

Zu einer verbesserten Fixierung des Elements 10A an dem Werkstück ist die Anlagefläche 14 mit einer den Befestigungsabschnitt 20 umlaufenden Nut 24 versehen. In der Nut 24 sind sich in radialer Richtung erstreckende Rippen 26 angeordnet. Bei dem Befestigungsprozess des Elements 10A wird Material des Werkstücks in die Nut 24 gepresst, wobei sich die Rippen 26 in das Material eingraben. Dadurch wird eine zuverlässige Sicherung des Elements 10A gegen ein Verdrehen relativ zu dem Werkstück bewirkt. Es versteht sich, dass zusätzliche oder alternative Verdrehsicherungsmerkmale vorgesehen sein können. Dabei können verschiedenartige Merkmale - z.B. Erhebungen und/oder Vertiefungen beliebiger Geometrie - kombiniert werden. Die Anlagefläche 14 muss auch nicht zwingend eine umlaufende Nut 24 aufweisen. Sie kann auch beispielsweise im Wesentlichen eben oder konisch ausgestaltet sein.

Verdrehsicherungsmerkmale können auch an der Außenseite des Befestigungsabschnitts 20 vorgesehen sein, z.B. in Form von sich in axialer Richtung erstreckenden Rippen und/oder Nuten (nicht gezeigt).

Im Gegensatz zu herkömmlichen Funktionselementen liegt die Stanzkante 22 nicht in einer Ebene, die senkrecht zu der axialen Richtung A angeordnet ist. Betrachtet man das Element 10A von der Seite, so ist zu erkennen, dass die Stanzkante 22 eine gewellte Formgebung aufweist (siehe auch Fig. 2). D. h. der Abstand der Stanzkante 22 von dem Kopfteil 12 ist also nicht konstant sondern er variiert in Umfangsrichtung. Dadurch ergeben sich im vorliegenden Ausführungsbeispiel drei Maxima 22`, die durch drei Minima 22" voneinander getrennt sind. Es versteht sich, dass die Anzahl der Maxima 22` und der Minima 22" bedarfsgerecht gewählt werden kann. Die Anzahl kann gerade oder ungerade sein. Anstelle einer gleichmäßigen oder drehsymmetrischen Anordnung kann auch eine unregelmäßige Anordnung und/oder Ausgestaltung der Maxima 22` und/oder der Minima 22" gewählt werden. Es ist beispielsweise auch möglich, die Maxima 22' (oder ein Maximum 22' oder einige der Maxima 22`) in Umfangsrichtung gesehen länger auszugestalten als die Minima 22" (oder ein Minimum 22" oder einige der Minima 22"), oder umgekehrt.

Bei einem Setzvorgang treten die Maxima 22' als erste mit der Oberfläche des Werkstücks in Kontakt. Die gesamte Setzkraft, die von der entsprechenden Setzeinrichtung (nicht gezeigt) aufgebracht wird, konzentriert sich somit zunächst auf diese Maxima 22`. Bei herkömmlichen Elementen verteilt sich die Setzkraft dahingegen gleichmäßig auf die gesamte Stanzkante. Dies wiederum bedeutet, dass das Funktionselement 10A leichter in das Werkstück eingebracht werden kann, gerade zu Beginn des Setzvorgangs, der in vielen Fällen besonders kritisch ist.

Im Verlauf des Setzvorgangs treten weitere Abschnitte der Stanzkante 22 mit dem Werkstück in Kontakt. Bei einer geeigneten Amplitude der Maxima 22` und Minima 22" und einer entsprechenden Dicke des Werkstücks kann die Situation auftreten, dass die Maxima 22` bereits aus dem Werkstück wieder austreten, bevor die tiefsten Bereiche der Minima 22" in das Werkstück eintreten. In solchen Fällen wird zu keinem Zeitpunkt des Setzvorgangs die gesamte Stanzkante 22 stanzend, sondern nur Teilabschnitte. Es kann aber auch vorgesehen sein, dass ab einem bestimmten Zeitpunkt des Setzvorgangs die gesamte Stanzkante 22 sich am Heraustrennen des Butzens beteiligt.

Ganz ähnlich ist dies Situation, wenn die Stanzkante 22 beginnt, mit einer Matrize (nicht gezeigt, beispielsweise eine herkömmliche Matrize mit kreisförmiger Geometrie) zusammen zu wirken, sodass eine Umformung des Befestigungsabschnitts 20 einsetzt. Die Maxima 22` wirken als erste mit der Matrize zusammen. D. h. die Umformung des Abschnitts 20 beginnt nicht im Umfangsrichtung überall zeitgleich, was mit einer substantiellen und einigermaßen plötzlichen Zunahme der wirkenden Kräfte einhergeht, sondern sie "wandert" zu den Minima 22". Dies hat zur Folge, dass die aufgrund der Wechselwirkung mit der Matrize ansteigenden Kräfte räumlich und zeitlich verteilt werden, was insgesamt gesehen zu einer Reduktion der auftretenden Belastungen führt.

Mit anderen Worten kann das Funktionselementen 10A in festere Werkstücke eingebracht werden, ohne dass die aufzubringende Setzkraft erhöht werden muss.

Fig. 2 zeigt eine Seitenansicht des Funktionselements 10A, wobei die linke Seite des Elements 10A geschnitten dargestellt ist. In dieser Ansicht ist zu erkennen, dass der Kopfteil 12 eine Art Flansch bildet, von dem sich der Funktionsabschnitt 16 und der Befestigungsabschnitt 20 in unterschiedlichen Richtungen erstrecken. Der Funktionsabschnitt 16 ist - wie bereits erläutert - mit dem Innengewinde 18 versehen, das sich in dem dargestellten Beispiel bis in den Bereich des Kopfteils 12 erstreckt. Anstelle des Innengewindes 18 können beispielsweise auch ein Rastabschnitt oder ein Abschnitt mit einer anderen Funktionalität vorgesehen sein.

Es ist auch denkbar, anstelle des Funktionsabschnitts 16 mit einer axialen Durchgangsöffnung einen Bolzenabschnitt vorzusehen, der beispielsweise an seinem Außenumfang Funktionalitäten bereitstellt, wie beispielsweise ein Gewinde o. ä..

Der gewellte Charakter der Stanzkante 22 ist ebenfalls gut zu erkennen.

Fig. 3 zeigt einen Ausschnitt der Fig. 2, um die Ausgestaltung der Stanzkante 22 näher zu erläutern. Sie weist in einem Übergang von einer radialen Außenfläche des Befestigungsabschnitts 20 zu einer Kantenlinie 28 einen gekrümmten Übergangsabschnitt 30 auf. Ausgehend von der Kantenlinie 28 zu einer radialen Innenfläche des Befestigungsabschnitts 20 ist eine schräger oder konischer Übergangsabschnitt 34 vorgesehen. Die Ausgestaltung der Übergangsabschnitte 32, 34 verbessert - sowohl jeweils für sich alleine genommen aber insbesondere in Kombination miteinander - die Stanzwirkung der Stanzkante 22.

Fig. 4 zeigt einen Teil einer axialen Ansicht des Funktionselements 10A bei einem Blick auf den Befestigungsabschnitt 20 und die Anlagefläche 14. Gut zu erkennen ist die Nut 24, die den Befestigungsabschnitt 20 umgibt und in deren Nutgrund die Rippen 26 vorgesehen sind, um eine Verdrehsicherung zu bewirken.

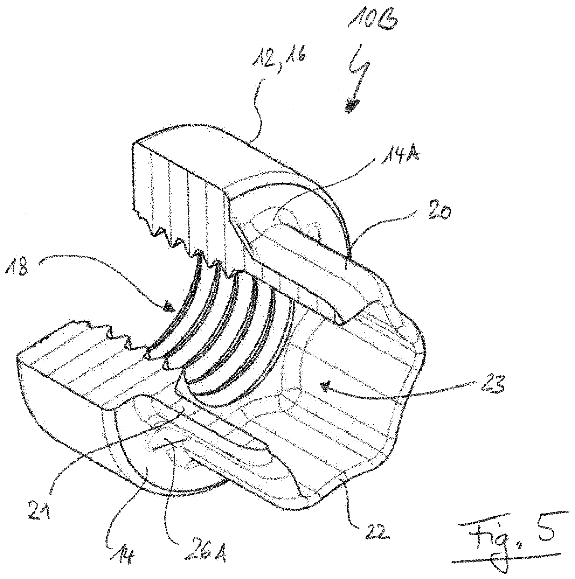

Fig. 5 zeigt eine teilgeschnittene Perspektivansicht eines als Mutterelement ausgebildeten Funktionselements 10B mit einem in Umfangsrichtung gewellten Befestigungsabschnitt 20. Die Wellung der Stanzkante 22 entspricht der der Wandung 21 und bildet - bildlich gesprochen - eine "Blütenform".

Der Kopfteil 12 umfasst in diesem Ausführungsbeispiel den Funktionsabschnitt 16, der wiederum mit einem Innengewinde 18 versehen ist. Ein Ende des Gewindes 18 ragt dabei noch geringfügig in den Befestigungsabschnitt 20, d.h. ein kleiner Teil des Gewindes 18 wird durch ein kopfseitiges Ende der Wandung 21 gebildet.

Die Anlagefläche 14 weist - anders als die des Funktionselements 10A - keine Nut auf. Sie geht über eine Krümmung 14A in den Befestigungsabschnitt 20 über. Ferner sind geneigte oder schräge Rippen 26 vorgesehen, die sich bei der Befestigung des Elements 10B in die Seitenwand des herausgestanzten Lochs eingraben, um eine Verdrehsicherung zu bewirken.

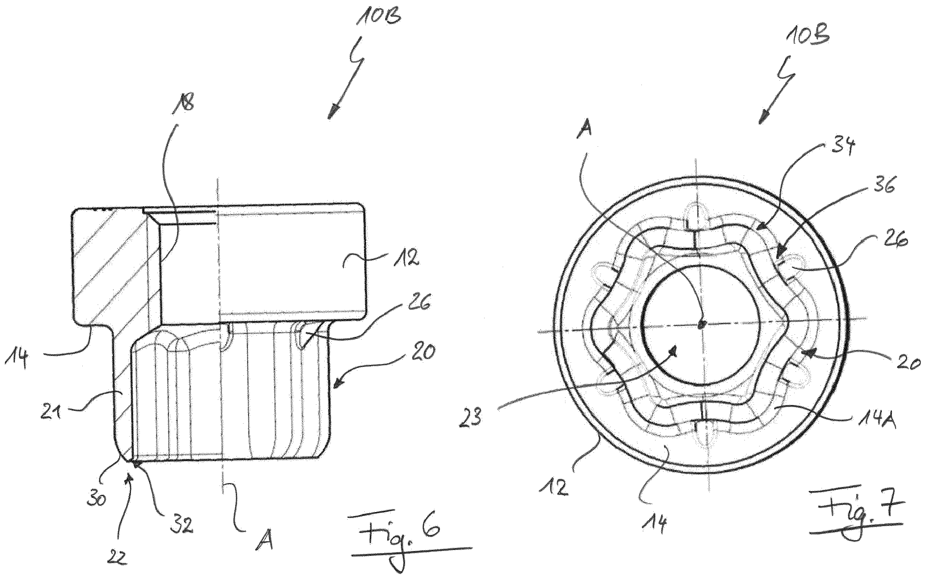

Der Befestigungsabschnitt 20 ist - anders als bei dem Funktionselementen 10A, das einen kreisrunden Befestigungsabschnitt 20 aufweist - in Umfangsrichtung gewellt. Dies ist auch gut der Fig. 7 zu entnehmen. Sie zeigt, dass sich vergleichsweise stärker gekrümmte Ausbuchtungen 34 und weniger stark gekrümmte Einbuchtungen 36 in Umfangsrichtung gesehen abwechseln. In der Mitte der Einbuchtungen 36 sind jeweils die Rippen 26 angeordnet.

Durch die gewählte Ausbildung des Befestigungsabschnitts 20 steht bei dessen Umformung im Rahmen des Befestigungsprozesses mehr Material zur Verfügung als bei einem runden Befestigungsabschnitt mit vergleichbarer Wanddicke. Bei dem Umformen auftretende Spannungen im Material des Befestigungsabschnitts 20 können so besser aufgenommen werden, was letztlich zur Verbesserung der Zuverlässigkeit der Verbindung des Elements 10B mit dem entsprechenden Werkstück führt. Mit anderen Worten: Aufgrund des zusätzlichen Materials wird eine Belastung des Befestigungsabschnitts 20 durch das Umformen reduziert wird bzw. der Befestigungsabschnitts 20 kann bei gleicher Belastbarkeit dünnwandiger ausgestaltet werden.

Zudem wird der als Nietabschnitt ausgebildete Befestigungsabschnitt 20 durch eine Matrize mit beispielsweise kreisförmiger Geometrie nicht gleichzeitig als Ganzes umgeformt. Es erfolgt ein graduelles Umformen des Abschnitts 20 mit zunehmender Eindringtiefe des Elements 10B. Dies wiederum bedeutet, dass die zur Umformung des Abschnitts 20 erforderlichen Kräfte fokussiert werden. Die von der Setzeinrichtung aufgebrachte Kraft wird somit bei einem Zusammenwirken des Abschnitts 20 mit der Matrize gleichmäßig verteilt, sondern "wandert" von den radial innen liegenden Enden der Einbuchtungen 36, die als erste mit der Matrize zusammenwirken, während des Befestigungsprozesses nach radial außen. Die radial äußeren Enden der Ausbuchtungen 34 werden als letztes umgeformt.

Die Geometrie der Einbuchtungen 34 und Ausbuchtungen 36 bestimmt also, wie sich die Umformkräfte während des Umformprozesses zeitlich und räumlich verteilen. Oder anderes herum formuliert: Durch eine geeignete Wahl der Geometrie der Stanzkante und/oder der Wandung können der Stanz- und/oder der Umformprozess optimiert werden. Die Fokussierung der Umformkräfte ermöglicht auch eine optimale Ausnutzung der von der Setzeinrichtung aufbringbaren Kräfte.

Ganz grundsätzlich ist festzustellen, dass das vorstehend beschriebene Konzept eines in Umfangsrichtung gewellten Befestigungsabschnitt nicht nur bei einem selbststanzenden Element zum Einsatz gelangen kann. Es kann auch bei einem Element berücksichtigt werden, dass in ein vorgefertigtes Loch eingesetzt wird. Die Kante 22 müsste dann nicht als Stanzkante ausgebildet sein. Sie könnte aber beispielsweise mit einer Einführhilfe (z.B. mit einer außenumfängliche Anfasung) versehen sein, um leichter in das vorgefertigte Loch eingeführt werden zu können.

Es versteht sich, dass die Anzahl der Ausbuchtungen 34 und der Einbuchtungen 36 bedarfsgerecht gewählt werden kann. Die Anzahl kann gerade oder ungerade sein. Anstelle einer gleichmäßigen oder drehsymmetrischen Anordnung kann auch eine unregelmäßige Anordnung und/oder Ausgestaltung der Ausbuchtungen 34 und/oder der Einbuchtungen 36 gewählt werden. Es ist beispielsweise auch möglich, die Ausbuchtungen 34 (oder eine Ausbuchtung 34 oder einige der Ausbuchtungen 34) in Umfangsrichtung gesehen länger auszugestalten als die Einbuchtungen 36 (oder eine Einbuchtung 36 oder einige der Einbuchtungen 36), oder umgekehrt.

Der Fig. 6 ist zu entnehmen, dass in diesem Ausführungsbeispiel der gekrümmte Übergangsabschnitt 30 der Stanzkante 22 weniger stark gekrümmt ist als der entsprechende Abschnitt 30 des Elements 10A. Auch der schräge oder konische Übergangsabschnitt 32 ist anders ausgebildet als der des Elements 10A; er ist weniger steil. Dies verdeutlicht, dass die Ausgestaltung der Übergangsabschnitte 30, 32 an die jeweiligen Anforderungen bedarfsgerecht angepasst werden kann, um ein optimales Stanzergebnis zu erzielen. Dabei sind unter anderem auch die Beschaffenheit des Werkstücks (z.B. Materialeigenschaften oder Blechdicke) zu berücksichtigen.

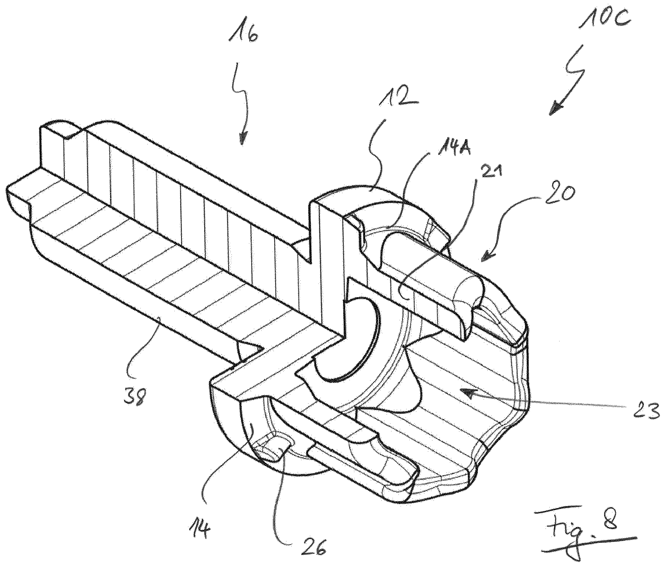

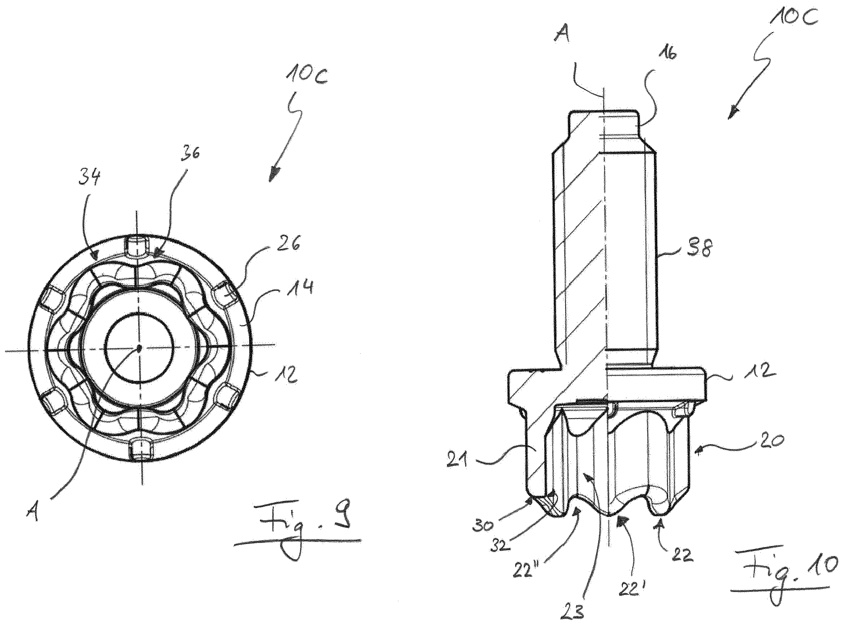

Fig. 8 zeigt ein Funktionselement 10C, das als Bolzenelement ausgebildet ist. Von dem Kopfteil 12 des Elements 10C erstreckt sich ein Funktionsabschnitt 16, der mit einem Außengewinde 38 versehen ist. An der dem Funktionsabschnitt 16 gegenüberliegenden Seite des Kopfabschnitts 12 ist die Anlagefläche 14 vorgesehen. Diese geht mit einer vergleichsweise starken Krümmung 14A in den Befestigungsabschnitt 20 über. Von der Anlagefläche 14 erstrecken sich in Umfangsrichtung gleichmäßig verteilte Rippen 26, die jedoch - anders als die des Elements 10B - eine freie Kante aufweisen, die senkrecht zu der axialen Richtung A ausgerichtet ist. Die Anlagefläche 14 ist ferner konisch ausgestaltet. D. h. in Blickrichtung von dem Kopfteil 12 zu der Stanzkante 22 konvergiert sie (siehe auch Fig. 10). Eine divergente Ausgestaltung (ggf. unter Ausbildung einer Nut) ist ebenfalls denkbar. Es sei hinzugefügt, dass die Anlagefläche 14 auch nur abschnittsweise (in Umfangsrichtung und/oder radialer Richtung) konisch ausgebildet sein kann.

Von der Anlagefläche 14 erstreckt sich der Befestigungsabschnitt 20 in axialer Richtung A, der einige Charakteristika der Befestigungsabschnitte 20 der Elemente 10A, 10B kombiniert. Er ist einerseits in Umfangsrichtung gewellt, andererseits weist auch seine Stanzkante 22 eine axial gewellte Formgebung auf.

Der durch den Kopfteil 12 und den Befestigungsabschnitt 20 begrenzte Hohlraum 23 kann den Butzen nach dessen Heraustrennen aufnehmen; d. h. in bestimmten Anwendungsfällen kann der Butzen in dem Hohlraum 23 verbleiben. Es ist nicht zwingend erforderlich ihn zu entfernen, da es sich bei dem Funktionselement 10C um ein Bolzenelement ohne axiale Durchgangsöffnung handelt, die bei Mutterelementen häufig nicht durch den Butzen versperrt werden darf.

Fig. 9 zeigt einen Teil einer axialen Ansicht des Funktionselements 10C in einem Blick auf den Befestigungsabschnitt 20 und die Anlagefläche 14. Es sind wiederum gekrümmte Ausbuchtungen 34 und gekrümmte Einbuchtungen 36 (jeweils 6 davon) zu erkennen, wobei deren Krümmungen sich weniger stark unterscheiden als bei dem Element 10B (siehe Fig. 7). In der Mitte der Einbuchtungen 36 sind die Rippen 26 angeordnet.

Fig. 10 zeigt eine teilgeschnittene Seitenansicht des Funktionselements 10C. Zu erkennen ist u.a., dass die Amplitude der axialen Wellung der Stanzkante 22 ausgeprägter ist, als bei dem Element 10A (siehe z.B. Fig. 2). Dies verdeutlicht, dass auch diesbezüglich ein erheblicher Gestaltungsspielraum besteht, um das jeweilige Element an die konkret vorliegenden Bedingungen bzw. Werkstück anzupassen.

In Fig. 10 ist auch gut die konische Ausgestaltung der Anlagefläche 14 zu sehen. Die Stanzkante 22 des Elements 10C weicht hinsichtlich ihrer konkreten Ausgestaltung auch von den entsprechenden Ausgestaltungen der Elemente 10A und 10B ab. Der gekrümmte Übergangsabschnitt 30 flacht nach radial innen ab. Außerdem ist der radial innenliegende Übergangsabschnitt 32 hier nur recht schwach ausgebildet.

Die vorliegende Erfindung wurde rein beispielhaft anhand von drei vorteilhaften Ausführungsformen beschrieben. Es versteht sich aber, dass die Ausgestaltung der Stanzkante 22 hinsichtlich der Übergangsabschnitte 30 und 32 frei wählbar ist. Es kann auch vorgesehen sein, dass beide Übergangsabschnitte 30, 32 gekrümmt oder schräg ausgebildet sind oder dass der Übergangsabschnitt 30 eine Schräge bildet, während der Übergangsabschnitt 32 gekrümmt ist.

Die axiale Wellung der Stanzkante 22 kann ebenfalls bedarfsgerecht gewählt werden. Drehsymmetrische Ausgestaltungen sind ebenso denkbar wie asymmetrische Ausführungsformen. Die Anzahl der "Wellen" ist ebenfalls ohne weiteres an die jeweils vorliegenden Bedingungen anpassbar. Zwar ist es bevorzugt, dass die Stanzkante 22 in axialer Richtung keine oder Sprünge aufweist. In bestimmten Anwendungsfällen kann jedoch auch eine solche Ausgestaltung vorteilhaft sein.

Die vorstehenden Ausführungen zu der axialen Wellung der Stanzkante 22 gelten in analoger Form für die Ausgestaltung der Wellung der Stanzkante 22 und/oder der Wandung des Befestigungsabschnitts 20 in deren Umfangsrichtung.

Die vorstehend beschriebenen Ausführungsformen der Übergangsabschnitte, der axialen Wellung, der Wellung in Umfangsrichtung, der Anlagefläche, der Verdrehsicherungsmerkmale, des Kopfteils und des Funktionsabschnitts können frei miteinander kombiniert werden, um ein für den jeweiligen Anwendungsfall optimiertes selbststanzendes Funktionselement zu schaffen.

### Bezugszeichenliste

- 10A, 10B, 10C: Funktionselement
- 12: Kopfteil
- 14: Anlagefläche
- 14A: Krümmung
- 16: Funktionsabschnitt
- 18: Innengewinde
- 20: Befestigungsabschnitt
- 21: Wandung
- 22: Stanzkante
- 23: Hohlraum
- 22`, 22": Maximum / Minimum
- 24: Nut
- 26: Rippe
- 28: Kantenlinie
- 30, 32: Übergangsabschnitt
- 34: Ausbuchtung
- 36: Einbuchtung
- 38: Außengewinde
- A: axialen Richtung, Mittenachse

## Patentansprüche

1. Funktionselement zur Anbringung an einem Werkstück, insbesondere an einem Blechteil, umfassend
einen Kopfteil (12) mit einer Anlagefläche (14), die in einem befestigten Zustand des Funktionselements an dem Werkstück anliegt,
einen sich in axialer Richtung (A) von dem Kopfteil erstreckenden Befestigungsabschnitt (20), insbesondere Nietabschnitt, zum Befestigen des Funktionselements an dem Werkstück, wobei der Befestigungsabschnitt eine einen Hohlraum (23) in Umfangsrichtung begrenzende Wandung (21) umfasst, die an einer dem Kopfteil abgewandten Seite eine freie Kante (22) aufweist, wobei die Kante und/oder die Wandung in Umfangsrichtung konkav und konvex gekrümmte Abschnitte (34, 36) umfasst.

2. Funktionselement nach Anspruch 1,
wobei die Kante (22) und/oder die Wandung (21) in Umfangsrichtung gewellt und/oder gezackt ausgestaltet sind.

3. Funktionselement nach Anspruch 1 oder 2,
wobei die Kante (22) und/oder die Wandung (21) in Bezug auf eine Mittenachse (A) des Funktionselements drehsymmetrisch ausgestaltet ist.

4. Funktionselement einem der vorstehenden Ansprüche,
wobei ein Abstand der Kante (22) von dem Kopfteil in Umfangrichtung nicht konstant ist und/oder wobei die Kante in Umfangsrichtung gesehen nicht in vollständig in einer Ebene liegt, die senkrecht zu einer Längsachse (A) oder Setzrichtung des Funktionselements angeordnet ist.

5. Funktionselement nach Anspruch 4,
wobei die Kante (22) in axialer Richtung (A) gekrümmte und/oder relativ zu der axialen Richtung geneigte Abschnitte (22`, 22") umfasst.

6. Funktionselement nach Anspruch 4 oder 5,
wobei die Kante (22) in einer Seitenansicht senkrecht zu der axialen Richtung (A) einen gewellten oder gezackten Verlauf aufweist.

7. Funktionselement nach zumindest einem der vorstehenden Ansprüche, wobei die Kante (22) in axialer Richtung und/oder in Umfangsrichtung frei von Unstetigkeitsstellen ist.

8. Funktionselement nach zumindest einem der vorstehenden Ansprüche, wobei die Kante (22) über einen gekrümmten äußeren Übergangsabschnitt (30) in eine Außenseite der Wandung (21) übergeht und/oder wobei die Kante über einen geradlinigen aber zur axialen Richtung geneigten inneren Übergangsabschnitt (32) in eine dem Hohlraum (23) zugewandte Innenseite der Wandung übergeht.

9. Funktionselement nach zumindest einem der vorstehenden Ansprüche, wobei die Wandung (21) in Umfangsrichtung eine im Wesentlichen konstante Dicke aufweist.

10. Funktionselement nach zumindest einem der vorstehenden Ansprüche, wobei die Anlagefläche (14) ringförmig ist.

11. Funktionselement nach zumindest einem der vorstehenden Ansprüche, wobei die Anlagefläche (14) mit zumindest einem Verdrehsicherungsmerkmal (26) versehen ist, insbesondere mit einer Mehrzahl von in Umfangsrichtung regelmäßig verteilten Verdrehsicherungsmerkmalen.

12. Funktionselement nach zumindest einem der vorstehenden Ansprüche, wobei die Anlagefläche (14) eine sich in Umfangsrichtung erstreckende Nut (24) aufweist.

13. Funktionselement nach zumindest einem der vorstehenden Ansprüche, wobei die Anlagefläche (14) konisch geneigt ausgestaltet ist und insbesondere zu dem Befestigungsabschnitt hin konvergiert.

14. Funktionselement nach zumindest einem der vorstehenden Ansprüche, wobei der Kopfteil (12) einen Funktionsabschnitt (16) umfasst und/oder wobei sich ein Funktionsabschnitt von der dem Befestigungsabschnitt (20) abgewandten Seite des Kopfteils erstreckt.

15. Funktionselement nach zumindest einem der vorstehenden Ansprüche, wobei die freie Kante (22) eine Stanzkante ist, so dass das Funktionselement selbststanzend ist.
